(19) Europäisches Patentamt / European Patent Office / Office européen des brevets

(11) **EP 2 124 276 A1**

(12) **EUROPEAN PATENT APPLICATION**
published in accordance with Art. 153(4) EPC

(43) Date of publication:
**25.11.2009 Bulletin 2009/48**

(51) Int Cl.:
*H01M 4/96* (2006.01)    *H01M 4/88* (2006.01)
*H01M 8/02* (2006.01)    *H01M 8/10* (2006.01)

(21) Application number: **08711818.8**

(22) Date of filing: **22.02.2008**

(86) International application number:
**PCT/JP2008/053044**

(87) International publication number:
**WO 2008/105337 (04.09.2008 Gazette 2008/36)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.02.2007 JP 2007048319**
**02.08.2007 JP 2007202372**
**02.08.2007 JP 2007202373**

(71) Applicant: **Tomoegawa Co., Ltd.**
**Tokyo 104-8335 (JP)**

(72) Inventors:
• **SUZUKI, Toshiyasu**
**Shizuoka-shi**
**Shizuoka 421-0192 (JP)**
• **KAWAGUCHI, Takuya**
**Shizuoka-shi**
**Shizuoka 421-0192 (JP)**
• **TOTSUKA, Hiroki**
**Shizuoka-shi**
**Shizuoka 421-0192 (JP)**

(74) Representative: **Vuillermoz, Bruno et al**
**Cabinet Laurent & Charras**
**"Le Contemporain"**
**50, Chemin de la Bruyère**
**69574 Dardilly Cédex (FR)**

(54) **GAS DIFFUSION ELECTRODE FOR SOLID POLYMER FUEL CELL, MEMBRANE-ELECTRODE ASSEMBLY FOR SOLID POLYMER FUEL CELL AND METHOD FOR PRODUCING THE SAME, AND SOLID POLYMER FUEL CELL**

(57)    One object of the present invention is to provide a gas diffusion electrode for a polymer electrolyte fuel cell, which has excellent water repellency for quickly supplying and removing a reaction gas, and conductivity for efficiently conducting generated electrical power, a membrane-electrode assembly for a polymer electrolyte fuel cell and a method for producing the same, and a polymer electrolyte fuel cell, and the present invention provides a gas diffusion electrode comprising a nonwoven fabric, a porous fluororesin, and a carbon material.

*FIG. 2*

EP 2 124 276 A1

**Description**

TECHNICAL FIELD

The present invention relates to a gas diffusion electrode for a polymer electrolyte fuel cell, a membrane-electrode assembly for a polymer electrolyte fuel cell, a production method for the membrane-electrode assembly for a polymer electrolyte fuel cell, and a polymer electrolyte fuel cell comprising the same.

BACKGROUND ART

A fuel cell is a power generation system which takes out chemical energy, as electric power, which is obtained by continuously supplying fuel and an oxidizer to carry out an electrochemical reaction. The fuel cell, which uses the power generation method by an electrochemical reaction, uses the backward reaction of electrolysis of water, i.e., a mechanism in which hydrogen is connected with oxygen, and electrons and water are generated. Since it has high efficiency and is kind to environment, it has been highlighted in recent years.

Fuel cells are classified by the kinds of electrolyte therein into phosphoric acid fuel cells, molten carbonate fuel cells, solid oxide fuel cells, alkaline fuel cells, and polymer electrolyte fuel cells. In recent years, since the polymer electrolyte fuel cells have advantages, such as being capable of starting at ordinary temperatures and having extremely short warm-up times, they have been attracting attention. A basic single cell in the polymer electrolyte fuel cells is produced by joining a gas diffusion electrode having a catalyst layer to both sides of a solid polyelectrolyte membrane, and further arranging a separator to both sides thereof.

In the polymer electrolyte fuel cell, hydrogen supplied to the fuel electrode side passes through gas passages in the separator and is introduced into a gas diffusion electrode. After the hydrogen is uniformly diffused in the gas diffusion electrode, the hydrogen is introduced into the catalyst layer on the fuel electrode side. In the catalyst layer, the hydrogen is separated into a hydrogen ion and an electron by a catalyst, such as platinum. The hydrogen ion passes through the electrolyte membrane, and is introduced into the other catalyst layer on an oxygen electrode side opposite to the fuel electrode side. Meanwhile, the electron produced on the fuel electrode side passes through circuits having load, is introduced into a gas diffusion layer on the oxygen electrode side, and is further introduced into a catalyst layer on the oxygen side. At the same time, oxygen, which is introduced from a separator on the oxygen electrode side, passes through a gas diffusion electrode on the oxygen electrode side, and reaches the catalyst layer on the oxygen electrode side. Then, water is produced by the oxygen, the electron, and the hydrogen ion, thereby completing the power generation system. Moreover, examples of fuel other than hydrogen which is used in the polymer electrolyte fuel cells include alcohol such as methanol and ethanol. These can be directly used as fuel.

Conventionally, a carbon paper and a carbon cloth, which are made of carbon fibers, are used as the gas diffusion layer of the polymer electrolyte fuel cell. In order to prevent flooding caused by water produced by an electrode reaction at the cathode or water for humidification which is used during operation of the fuel cell, the surface or inside of pores in the carbon paper and the carbon cloth is subjected to a water repellent treatment by a water repellent binder, such as tetrafluoroethylene (PTFE). However, since the diameter of the pores in the carbon paper and carbon cloth are very large, sufficient water repellent effects may not be obtained, and water may remain in the pores.

In order to solve this problem, a gas diffusion electrode, which comprises a carbon paper and a porous resin containing a conductive filler such as carbon, has been suggested in Patent Document 1. However, the gas diffusion electrode shown in Patent Document 1 is produced by directly coating the porous resin containing a conductive filler such as carbon onto the surface of the carbon paper, penetrating the porous resin in the carbon paper, extracting with solvents, and drying. Therefore, many pores in the carbon paper are closed, and gas permeability decreases. Due to this, the fuel cell performance decreases.

Patent Document 2 shows an idea for making a water repellent layer by applying a mixture containing carbon black and PTFE to a mesh made of stainless steel. However, similar to the above-mentioned gas diffusion electrode, pores in the stainless steel mesh are closed with the mixture, and gas permeability decreases. Due to this, the fuel cell performance decreases. In addition, when the fuel cell is manufactured, it is necessary to contact closely or adhere the gas diffusion electrode to the electrolyte using an adhesive. However, when the gas diffusion electrode is pressed, pores in the porous membrane in the gas diffusion electrode collapse. Discharge of gas and water may be prevented.

Patent Document 3 shows a polymer electrolyte fuel cell comprising a gas diffusion layer containing at least two kinds of carbon particles having different median of particle diameter distribution. In addition, Patent Document 3 discloses that black lead is used as carbon particles having a larger particle diameter, and the gas diffusion layer is made using carbon particles which are covered with a fluororesin and have water repellency. However, the gas diffusion layer in the polymer electrolyte fuel cell has low strength and insufficient water repellency.

[Patent Documents 1] Japanese Unexamined Patent Application, First Publication No. 2003-303595

[Patent Documents 2] Japanese Unexamined Patent Application, First Publication No. 2000-58072
[Patent Documents 3] Japanese Unexamined Patent Application, First Publication No. 2001-57215

DISCLOSURE OF THE INVENTION

PROBLEMS TO BE SOLVED

The present invention has these problems to be solved. That is, one object of the present invention is to provide a gas diffusion electrode for a polymer electrolyte fuel cell, which has excellent water repellency, strength sufficient for preventing pores in a porous membrane from being crushed during production, obtains sufficient gas diffusion properties, and thereby allowing excellent properties for a fuel cell to be maintained.

Another object of the present invention is to provide a membrane-electrode assembly comprising the gas diffusion electrode for a polymer electrolyte fuel cell, and a simple production method for the membrane-electrode assembly.

Another object of the present invention is to provide a polymer electrolyte fuel cell comprising the gas diffusion electrode and having excellent properties for a fuel cell.

MEANS FOR SOLVING THE PROBLEM

In order to achieve the object, the present invention provides a gas diffusion electrode comprising a nonwoven fabric, a porous fluororesin, and a carbon material.

In the gas diffusion electrode, it is preferable that the carbon material be carbon material fibers.

In the gas diffusion electrode, it is preferable that the aspect ratio of the carbon material fiber be in a range of from 10 to 500.

In the gas diffusion electrode, it is preferable that the gas diffusion electrode further comprise polytetrafluoroethyelene particles.

In the gas diffusion electrode, it is preferable that the polytetrafluoroethylene particles be fixed into the nonwoven fabric.

In the gas diffusion electrode, it is preferable that the nonwoven fabric be covered with the porous fluororesin, a thickness of the porous fluororesin be thicker than a thickness of the nonwoven fabric.

In the gas diffusion electrode, it is preferable that the nonwoven fabric comprise polyarylate fibers. The nonwoven fabric formed by polyarylate fibers do not decompose and deform less under high temperatures and high pressures.

In the gas diffusion electrode, it is preferable that the fluororesin be a fluorinated olefin resin.

In the gas diffusion electrode, it is preferable that the carbon material be carbon material particles.

In the gas diffusion electrode, it is preferable that the carbon material comprise carbon material particles and carbon material fibers.

In the gas diffusion electrode, it is preferable that the carbon material particles be carbon black.

In the gas diffusion electrode, it is preferable that the carbon black be acetylene black.

In the gas diffusion electrode, it is preferable that the carbon material be carbon material fibers, and a ratio between the carbon material fibers and the porous fluororesin be in a range of from 0.30 to 5.0 parts by weight relative to 1 part by weight of the porous fluororesin.

In the gas diffusion electrode, it is preferable that the gas diffusion electrode further comprise a conductive porous sheet laminated on the gas diffusion electrode.

In order to achieve the object, the present invention provides a membrane-electrode assembly for a polymer electrolyte fuel cell in which the gas diffusion electrode is laminated on both sides of a polymer electrolyte membrane via a catalyst layer.

In addition, in order to achieve the object, the present invention provides a method for producing a membrane-electrode assembly for a polymer electrolyte fuel cell comprising: after coating or penetrating a fluororesin solution, in which a carbon material is dispersed, to a nonwoven fabric and drying to form a porous membrane; a first step for forming a catalyst layer on the porous membrane to form a gas diffusion electrode having the catalyst layer; and a second step for arranging the catalyst layer of the gas diffusion electrode having the catalyst layer on both sides of a polymer electrolyte membrane, and joining the gas diffusion electrode having the catalyst layer and the polymer electrolyte membrane.

In addition, in order to achieve the object, the present invention provides another method for producing a membrane-electrode assembly for a polymer electrolyte fuel cell comprising: a first step for forming a catalyst layer on both sides of a porous membrane to form a polymer electrolyte membrane having the catalyst layers; and a second step for coating or penetrating a fluororesin solution, in which a carbon material is dispersed, to a nonwoven fabric, and drying it to form a gas diffusion electrode made of a porous membrane, arranging the gas diffusion electrode to the polymer electrolyte membrane such that the gas diffusion electrode contacts the catalyst layer of the polymer electrolyte membrane.

Furthermore, in order to achieve the object, the present invention provide a polymer electrolyte fuel cell in which the gas diffusion electrode is provided on both sides of the polymer electrolyte membrane via the catalyst layer, and a separator is further provided on the outsides of the gas diffusion electrode.

EFFECTS OF THE PRESENT INVENTION

The gas diffusion electrode for a polymer electrolyte fuel cell according to the present invention comprises a membrane made of a porous fluororesin containing a carbon material. The surface of the membrane has water repellency and water discharging properties due to the fluororesin, and conductivity due to the carbon material, and is smooth. However, when a gas diffusion layer is made of only a porous fluororesin, pores are crushed during a heat press in production processes. In order to compensate, a nonwoven fabric is used as a reinforcing material. Since the nonwoven fabric has an excellent compressive resistance, pores made by the porous fluororesin inside of pores of the nonwoven fabric are protected by the nonwoven fabric, and are not crushed.

Since the gas diffusion electrode for a polymer electrolyte fuel cell according to the present invention has these features, flooding, which is generated by water for humidification during operation of the fuel cell, or water produced by the electrode reaction, can be prevented. In addition, the gas diffusion electrode has excellent water repellency sufficient for supplying and removing a reaction gas, and conductivity which is sufficient for effectively conducting the electricity generated. In addition, even if the gas diffusion electrode is pressurized during production of the fuel cell, pores in the porous gas diffusion electrode are not crushed due to the ability of the nonwoven fabric. Thereby, the permeation of water or gas is prevented.

In addition, since the porous fluororesin has excellent adhesion, the porous fluororesin membrane contacts closely to the catalyst layer, and there is no gap between them, water does not accumulate in the gap.

Furthermore, water repellency is improved by the carbon material fiber. Due to this, the drainage ability of the gas diffusion layer is also improved, and flooding can be more certainly prevented. In addition, conductivity can be maintained by using the carbon material fibers.

The fuel cell comprising the gas diffusion electrode for a polymer electrolyte fuel cell according to the present invention has excellent discharging ability of gas and water and conductivity in a power generation cycle.

Furthermore, there is no nonwoven fabric at the surface of the gas diffusion electrode for a polymer electrolyte fuel cell, and the surface of the gas diffusion electrode is smooth. The gas diffusion electrode of the present invention does not damage or break the catalyst layer and the polymer electrolyte membrane, compared with conventional gas diffusion electrodes made of a carbon fiber sheet.

BRIEF DESCRIPTION OF THE DRAWINGS

FIG. 1 is a cross sectional view showing the nonwoven fabric used in the gas diffusion electrode for a polymer electrolyte fuel cell according to the present invention.

FIG. 2 is a cross sectional view showing the gas diffusion electrode for a polymer electrolyte fuel cell according to the present invention.

FIG. 3 is a cross sectional view showing the membrane-electrode assembly according to the present invention.

FIG. 4 is a cross sectional view showing a gas diffusion electrode for a polymer electrolyte fuel cell in the Comparative Examples.

EXPLANATION OF REFERENCE SYMBOLS

1      a gas diffusion electrode in Comparative Examples
10     a nonwoven fabric
11     fluororesin containing dispersed carbon material at the surface of the nonwoven fabric
15     a polymer electrolyte membrane
16     a catalyst layer
20     a gas diffusion electrode according to the present invention
50     a membrane-electrode assembly
A      a surface of the gas diffusion electrode, and the thickness of the fluororesin containing dispersed carbon material at the vicinity of the surface of the nonwoven fabric

B a middle layer of the gas diffusion electrode, and a thickness of the nonwoven fabric

BEST MODE FOR CARRYING OUT THE INVENTION

The present invention will be explained in detail below.

The gas diffusion electrode for a polymer electrolyte fuel cell (abbreviated as "gas diffusion electrode" below), a membrane-electrode assembly for a polymer electrolyte fuel cell (abbreviated as "membrane-electrode assembly" below), a production method for the membrane-electrode assembly, and a polymer electrolyte fuel cell (abbreviated as "fuel cell" below) according to the present invention are explained.

The gas diffusion electrode of the present invention has a characteristic feature of having a nonwoven fabric, a fluororesin, and a carbon material.

Nonwoven Fabric

The gas diffusion electrode of the present invention has a nonwoven fabric. Examples of the nonwoven fabric used in the present invention include an acrylic fiber, vinylon, a carbon fiber, a glass fiber, an aramid fiber, a polyethylene (PE) fiber, a polypropylene (PP) fiber, a polyethylene terephthalate (PET) fiber, polybutylene terephthalate (PBT) fiber, a polyarylate fiber, a polyvinyl alcohol fiber, a benzazole fiber, a poly(para-phenylene) benzobisoxazole fiber, a polyphenylene sulfide (PPS) fiber, a polytetrafluoroethylene (PTFE) fiber, a mixture thereof, and a mixture of a PET fiber and a linen fiber. Among these, a nonwoven fabric comprising a polyarylate fiber is preferable, because it does not decompose and hardly deforms under high temperatures or high pressures.

The thickness of the nonwoven fabric is preferably in a range of from 5 to 200 $\mu$m, and more preferably in a range of from 10 to 150 $\mu$m.

Fluororesin

Examples of the fluororesin used in the present invention include a fluorinated olefin resin, such as fluorinated vinylidene, tetrafluoroethylene, a tetrafluoroethylene-fluoroalkyl vinyl ether copolymer, and a fluoroethylene-hexafluoropropylene copolymer. These can be used alone or in combination.

Among these, a fluorinated olefin resin is preferable, because it has high heat resistance and mechanical strength. Therefore, it is possible to form a porous membrane with high accuracy.

In addition, water for humidification in the porous membrane and water produced by the electrode reaction in the cathode can be discharged effectively.

Examples of the fluorinated olefin resin preferably used in the present invention include a copolymer containing fluorinated vinylidene and one or more kinds of monomer selected from the group consisting of tetrafluorinated ethylene, hexafluorinated propylene, and ethylene, a multicomponent copolymer containing three or greater kinds of the monomers, in addition to a homopolymer of fluorinated vinylidene. In addition, the resin can be used alone or in combination of two kinds or more.

It is preferable that the mass average molecular weight of the fluororesin be in a range of from 100,000 to 1,200,000. When the mass average molecular weight is less than 100,000, the strength may be lowered. In contrast, when it exceeds 1,200,000, solubility in a solvent decreases. Due to this, it is difficult to obtain a coating. In addition, the viscosity of a coating containing such a fluororesin is not uniform, and the thickness accuracy of a final gas diffusion electrode also decreases. Thereby, adhesion between the gas diffusion electrode and the catalyst layer may not be uniform.

Carbon Material

Examples of the carbon material used in the gas diffusion electrode according to the present invention include carbon material particles, carbon material fibers, and a mixture of the carbon material particles and the carbon material fibers. However, it is preferable to use at least carbon material fibers.

Any carbon material fibers can be used. For example, carbon fiber, carbon nanofiber (marketed by Showa Denko K.K., trade name: VGCF), or carbon nanotubes can be used.

Carbon material fiber used in the present invention has an average diameter in a range of from 10 nm to 300 nm, and an aspect ratio (an aspect ration is the ratio between the diameter of the cross section and the length of the fiber. When the fiber is curved, an aspect ratio is the ratio between the diameter of the cross section and the length of the curved fiber without straightening the curved fiber) in a range of from 5 to 10,000. Since the carbon material fiber, which has the average diameter in the range and the aspect ration in the range, has high graphitization degree, it has high conductivity, and can improve fuel cell performance.

When only the carbon material fiber is used, it is preferable that a range of from 0.3 to 5.0 parts by weight of the carbon material fiber be used relative to 1 part of the fluororesin. When it is less than 0.3 parts by weight, conductivity of the gas diffusion layer tends to be lower. In contrast, when it exceeds 5.0 parts, dispersibility of the carbon material fiber into the fluororesin decreases. Due to this, the surface of the obtained gas diffusion electrode is uneven. Thereby, a slight gas between the gas diffusion electrode and an adjacent layer such as the contact layer is caused, and gas diffusion ability tends to be lower. In other words, when the weight part of the carbon material fiber used is out of that range, fuel cell performance is easily degraded.

Any carbon material particles can be used. Examples of the carbon material particles used include carbon black such as furnace black, channel black, acetylene black. Among these, acetylene black is preferably used, since it has high conductivity and high dispersibility in a coating.

Carbon black having of any grade and regardless of specific surface area and particle diameter can be used. Examples of the carbon black used include KETJEN BLACK ®, marketed by Lion Akzo Co., Ltd.; VULCAN ® XC72R, marketed by Cabot Co., Ltd.; and DENKABLACK ®, marketed by Denki Kagaku Kogyo K.K..

These carbon material particles preferably have an average primary particle in a range of from 10 to 100 nm.

When the carbon material particles are only used as the carbon material, a rage of from 0.1 to 3 parts by weight of the carbon material particles is preferably used relative to 1 parts of the fluororesin, and a range of from 0.3 to 1.5 parts is more preferable. When it is less than 0.1 part by weight, conductivity of the gas diffusion layer tends to be lower. In contrast, when it exceeds 3 parts, gas diffusion performance easily decreases. In other words, when the weight part of the carbon material particles used is out of that range, fuel cell performance is easily degraded.

When a mixture containing the carbon material particles and the carbon material fibers is used, the carbon material particles are preferably used in a range of from 0.1 to 3.0 parts by weight and the carbon material fibers are preferably used in a range of from 0.1 to 2.0 parts by weight, relative to 1 part by weight of the fluororesin.

Filler

The gas diffusion electrode according to the present invention may include a filler in addition to the carbon material.

When the filler is added into the gas diffusion electrode, it is possible to control the discharge of gas and water, the pore diameter of the porous membrane, and the dispersibility of the carbon material. Thereby, it is also possible to improve fuel cell performance.

Any inorganic particles and any organic particles can be used as the filler. However, when the environmental conditions in the gas diffusion electrode in the fuel cell are considered, inorganic fine particles are preferably used. In addition, hydrophilic inorganic fine particles are more preferable.

Examples of the hydrophilic inorganic oxide fine particle include titanium dioxide, and silicon dioxide. They can endure the environmental conditions in the gas diffusion electrode in the fuel cell, and have sufficient hydrophilicity.

The fillers having any particle diameters can be used. However, when the particle diameter is extremely small, dispersion in a coating is difficult. In contrast, it is extremely large, the fillers block the pores in the nonwoven fabric layer. Therefore, the particle diameter of the filler is preferably in a range of from 10 to 100 nm.

When the hydrophilic filler is added to the water repellent fluororesin, water repellent parts and hydrophilic parts are complicated microscopically. In addition, the filler and the carbon materials form aggregates, and the aggregates enlarge the diameter of the pores in the nonwoven fabric layer. As a result, gas and water are effectively discharged. Thereby, it is possible to prevent degradation of the fuel cell performance caused by flooding.

In addition, when extreme high water repellency is desired, particles made of PTFE may be added as the filler. In this case, the nonwoven fabric layer works as an ultra water repellent membrane.

The filler is preferably used in a range of from 0.1 to 3 parts by weight, and more preferably in a range of from 0.1 to 1.5 parts by weight, relative to 1 part by weight of the fluororesin. When the weight part of the filler exceeds 3 parts, much filler is filled inside of the nonwoven fabric layer. Due to this, gas diffusion ability decreases and conductivity also decreases. As a result, fuel cell performance may be degraded.

The thickness of the gas diffusion electrode is preferably in a range of from 5 to 300 $\mu$m, more preferably in a range of from 10 to 150 $\mu$m, and most preferably in a range of from 15 to 70 $\mu$m. When it is less than 5 $\mu$m, water retaining ability is insufficient. In contrast, when it exceeds 300 $\mu$m, the gas diffusion ability and water discharge ability are also decreased. In other words, when the thickness of the gas diffusion electrode is out of that range, fuel cell performance is easily degraded.

Moreover, the nonwoven fabric is preferably covered with the porous fluororesin in the gas diffusion electrode of the present invention. In other words, the thickness of the gas diffusion electrode is preferably thicker than the nonwoven fabric itself.

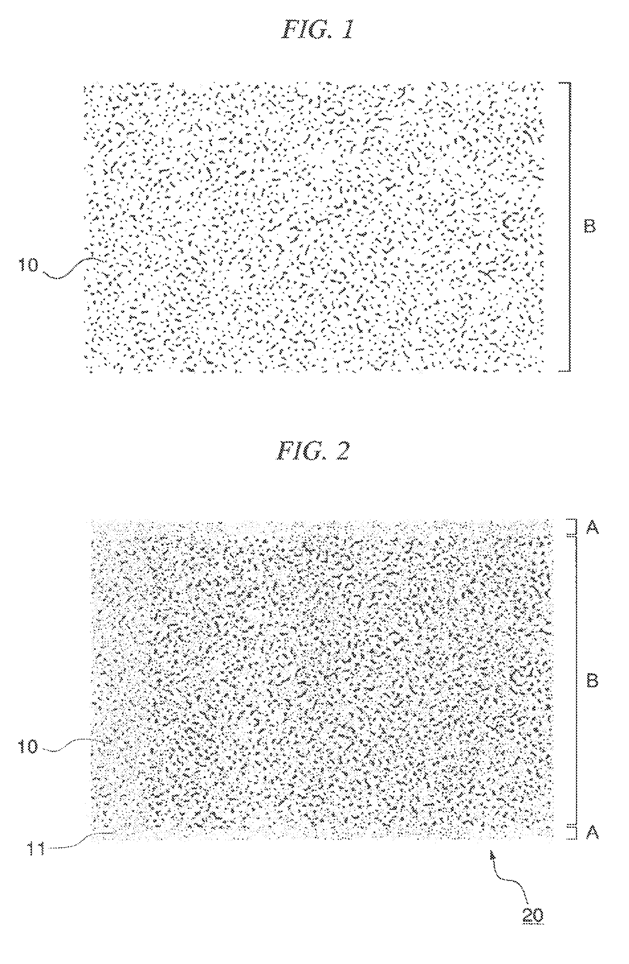

The relationship between the thickness of the porous fluororesin and the thickness of the nonwoven fabric in the gas diffusion electrode of the present invention is explained with reference to FIGS. 1 and 2.

FIG. 1 is a cross sectional view showing the nonwoven fabric used in the gas diffusion electrode, and FIG. 2 is a cross sectional view showing the gas diffusion electrode in the present invention.

In figures, the reference number 10 denotes the nonwoven fabric arranged in the center of the gas diffusion electrode 20, the thickness of the nonwoven fabric is denoted by B. The reference number 11 denotes the porous fluororesin containing dispersed carbon material, and also denotes the porous fluororesin arranged around the surface of the gas diffusion electrode. The thickness of the porous fluororesin 11 is denoted by A. Moreover, the porous fluororesin is not arranged only at the surface of the nonwoven fabric 10. It is preferable that the porous fluororesin penetrate into the nonwoven fabric 10, and exist at both sides of the nonwoven fabric 10.

Specifically, it is preferable that the nonwoven fabric 10 absorb the porous fluororesin 11. When the nonwoven fabric 10 absorbs the porous fluororesin 11, the thickness B of the nonwoven fabric 10 increases at the thickness A + A' of the porous fluororesin at the both surfaces of the nonwoven fabric 10. Moreover, A may be equal to A' or not. The thickness A of the porous fluororesin is preferably in a range of from 1 to 25 $\mu$m.

The nonwoven fabric is not present at the surface of the gas diffusion electrode 20. Only the fluororesin 11, in which the carbon material is dispersed, is present at the surfaces of the gas diffusion electrode 20. The gas diffusion electrode 20 has smooth surfaces without irregularity.

The gas diffusion electrode adheres closely to the catalyst layer when hot press, and there is no gap between them.

The gas diffusion electrode according to the present invention is a porous membrane. The structure of a porous membrane, that is, the gas diffusion electrode, is decided, for example, by density, porosity, and pore diameter.

The density of the porous membrane is calculated by the thickness and mass per unit area of the gas diffusion electrode, and is preferably in a range of from 0.10 to 0.65 g/cm$^3$.

$$\text{Density (g/cm}^3\text{)} = \text{mass per unit area} / (\text{thickness x unit area})$$

The porosity can be calculated by substituting the following parameters a to e, and the density of the porous membrane into the following formula.

a = (specific gravity of the porous fluororesin) x (weight percentage of the porous fluororesin)
b = (specific gravity of the carbon material particles) x (weight percentage of the carbon material particles)
c = (specific gravity of the filler) x (weight percentage of the filler) d = (specific gravity of the carbon material fibers) x (weight percentage of the carbon
material fibers)
e = (specific gravity of the nonwoven fabric) x (weight percentage of the nonwoven fabric)

$$\text{Porosity (\%)} = [\{(a+b+c+d+e) - \text{density of the porous membrane}\} / (a+b+c+d+e)] \text{ x } 100$$

In the gas diffusion electrode of the present invention, the porosity is preferably in a range of from 60% to 95%, more preferably in a range of from 70% to 95%, and most preferably in a range of from 80% to 95%. When the porosity is less than 60%, gas diffusion ability and discharge of water is insufficient. In contrast, when it exceeds 95%, the mechanical strength is remarkably decreased. Thereby, the gas diffusion electrode is easily damaged during production of the fuel cell.

The diameter of the pores is preferably in a range of from 0.5 to 10$\mu$m, more preferably in a range of from 3 to 10 $\mu$m, and more preferably in a range of from 5 to 10 $\mu$m. When it is less than 0.5 $\mu$m, gas diffusion ability and water discharge ability are insufficient.

In addition, a conductive porous sheet may be laminated on the porous fluororesin at the surface of the nonwoven fabric in the gas diffusion electrode of the present invention.

The conductive porous sheet may be a carbon paper or a carbon cloth made of carbon fibers, foamed nickel, a titanium fiber sintered body, or the like.

Since the gas diffusion electrode having the conductive porous member has a structure in which the nonwoven fabric layer and the conductive porous member are laminated, the pores in the conductive porous member are not blocked by the resin or the carbon material which constitute the nonwoven fabric layer, dissimilar to the gas diffusion electrode for a fuel cell disclosed in Patent Document 1.

The gas diffusion electrode has excellent gas permeability in the pores, and fuel cell performance is improved.

Method for Producing the Gas Diffusion Electrode

The gas diffusion electrode of the present invention can be produced by the following steps.

First, the fluororesin is dissolved in a solvent, and then the carbon material and, if necessary, a filler other than the carbon material are dispersed to produce a solvent mixture.

After that, a solvent, which has a boiling point higher than the boiling point of the solvent used to dissolve the fluororesin, and does not dissolve the fluororesin, is added to produce a fluororesin solvent.

Examples of the solvent, which dissolves the fluororesin, include 1-methyl-2-pyrrolidone.

Examples of the solvent, which does not dissolve the fluororesin, include diethylene glycol.

In order to dissolve, disperse, and mix to produce the fluororesin solvent, a commercial stirrer and disperser can be used.

The produced fluororesin solvent is coated onto and allowed to penetrate the nonwoven fabric, and then it is dried. Thereby, the gas diffusion electrode, which is a conductive porous member, according to the present invention can be produced.

In addition, the gas diffusion electrode of the present invention can also be produced by immersing the nonwoven fabric into the fluororesin solvent to penetrate the fluororesin solvent into the nonwoven fabric, removing excess fluororesin solvent with rollers positioned so as to keep a suitable interval, and drying the result.

Furthermore, the gas diffusion electrode of the present invention can also be produced by coating the fluororesin solvent to a proper base, transferring the fluororesin solvent to the nonwoven fabric, and drying the result. In this case, the base may be peeled after drying, or removed during production of the following membrane-electrode assembly. Examples of the base include a polyimide film, and a polyethylene naphthalate film (PEN).

In addition when the gas diffusion electrode of the present invention has the conductive porous sheet, the gas diffusion electrode can be produced by laminating the conductive porous sheet on the porous fluororesin around the surface of the nonwoven fabric produced by these steps, and pressurizing and joining them by heat press.

Membrane-Electrode Assembly

The membrane-electrode assembly of the present invention has a structure in which a polymer electrolyte membrane is sandwiched by catalyst layers, and further sandwiched by the gas diffusion electrode which is produced by the above-mentioned method.

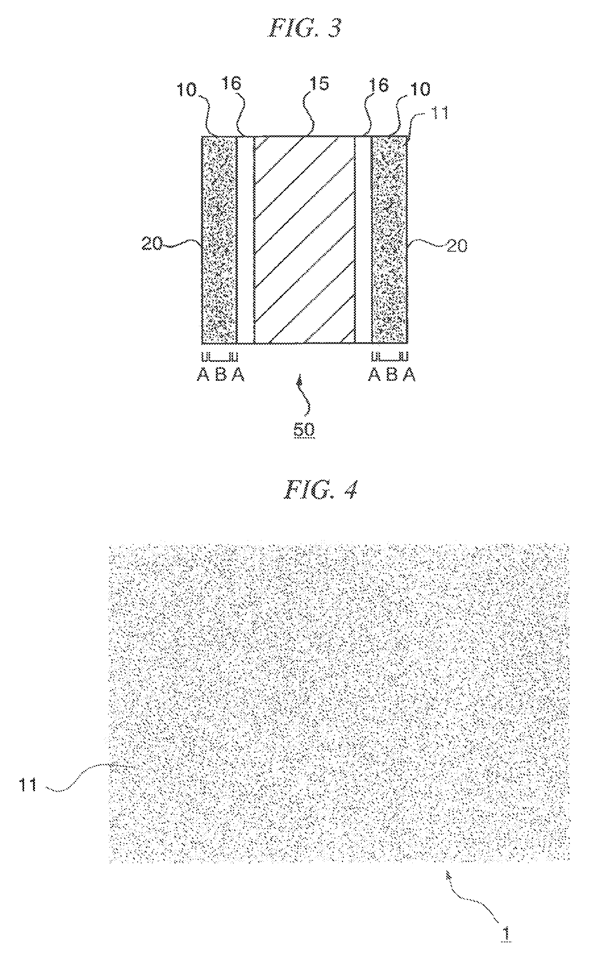

The membrane-electrode assembly of the present invention is explained with reference to FIG. 3. FIG. 3 is a cross sectional view showing the membrane-electrode assembly according to the present invention.

In FIG. 3, the reference number 15 denotes a polymer electrolyte membrane, the reference number 16 denotes the catalyst layer, and the reference number 50 denotes the membrane-electrode assembly. As shown in FIG. 3, the gas diffusion electrode is arranged at the both surfaces of the polymer electrolyte membrane 15, via the catalyst layers 16. The gas diffusion electrode 20 contacts the catalyst layer 16 at the surface A.

The membrane-electrode assembly can be produced by the following first or second production method.

In the first production method of the membrane-electrode assembly, the membrane-electrode assembly 50 produced by a first step in which the gas diffusion electrode 20 is produced by the above-mentioned method, and a coating for forming the catalyst layer is coated to the gas diffusion electrode 20, and thereby the gas diffusion electrode 20 having the catalyst layers 16 is produced, and a second step in which the gas diffusion electrode 20 having the catalyst layers 16 is arranged to the polymer catalyst membrane 15 such that the catalyst layer 16 contacts both surfaces of the polymer electrolyte membrane 15, and joining the gas diffusion electrodes 20 and the polymer electrolyte membrane 15 by heat press.

In the second production method, the membrane-electrode assembly 50 produced by a first step in which a coating for forming the catalyst layer is coated to both surfaces of the polymer electrolyte membrane 15 to produce the catalyst layers 16, and thereby a polymer electrolyte membrane 15 having the catalyst layers is produced, and a second step in which the gas diffusion electrode 20 is positioned at the surface of the catalyst layer in the polymer electrolyte membrane 15, and joining the gas diffusion electrodes 20 and the polymer electrolyte membrane 15 by heat press.

The production method for the membrane-electrode assembly of the present invention has only a step for producing the gas diffusion electrode having the catalyst layer or the polymer electrolyte membrane having the catalyst layers, and a step for joining the produced the gas diffusion electrode having the catalyst layer or the polymer electrolyte membrane having the catalyst layers to the polymer electrolyte membrane or the gas diffusion electrode, respectively. Therefore, according to the production method of the present invention, the membrane-electrode assembly can be produced very easily.

In addition, since the produced membrane-electrode assembly has the gas diffusion electrode, it has excellent water repellency and gas diffusion ability.

Polymer Electrolyte Fuel Cell

The polymer electrolyte fuel cell according to the present invention has a cell structure in which a carbon paper or a carbon cloth is arranged at both sides of the membrane-electrode assembly, and a separator is further arranged at the outer side of the carbon paper or the carbon cloth. Moreover, the carbon paper or the carbon cloth may not be used.

Any separators, which are well-known and used in polymer electrolyte fuel cells, can be used.

Since the polymer electrolyte fuel cell of the present invention includes the gas diffusion electrode, excellent water repellency and gas diffusion ability can be obtained.

Hereinbelow, preferable gas diffusion electrodes among the gas diffusion electrodes of the present invention are explained.

The first preferable gas diffusion electrode includes the porous fluororesin containing the carbon material fibers, and uses the nonwoven fabric as a structure holding material (a material for preventing pores from being crushed). In the first preferable gas diffusion electrode, the nonwoven fabric is covered with the porous fluororesin. The characteristic feature of the first preferable gas diffusion electrode is that the carbon material is the carbon material fibers.

The carbon material fibers prevent the pores in the porous membrane made of the fluororesin from being crushed by pressure applied during production of the fuel cell. That is, the carbon material fibers work as an inhibitor for inhibiting the prevention of movement of gas or water. At the same time, the carbon material fibers keep the conductivity and improve the water repellency. In the present invention, the carbon material fiber means the carbon material fibers having an aspect ration (the ratio between the diameter of the cross section and the length in the fiber) in a range of from 5 to 10,000.

In the present invention, the aspect ratio is more preferably in a range of from 10 to 500. When it is less than 5, the effect for preventing the crush of the pores cannot be obtained. In contrast, when it exceeds 10,000, the dispersibility into the fluororesin decreases. In addition, the average diameter of the carbon material fiber is preferably in a range of from 100 nm to 200 nm.

Examples of the carbon material fibers include carbon fiber, carbon fiber made by a vapor phase method (for example, carbon nanofiber marketed by Showa Denko K.K.,(trade name: VGCF), and carbon nanotubes. The carbon fiber used in the present invention has a degree of graphitization and high conductivity. Therefore, it can decrease resistance of the gas diffusion electrode. In addition, when the gas diffusion electrode has the carbon fiber, water repellency is improved by the high degree of graphitization of the carbon fiber. Due to this, water discharge ability of the gas diffusion electrode is also improved, and flooding can be effectively prevented.

In the present invention, the ratio between the carbon material fiber and the porous fluororesin is preferably in a range of from 0.30 parts by weight to 5.0 parts by weight relative to 1 part by weight of the porous fluororesin. When the ratio of the carbon material fiber is less than 0.30 parts by weight, water repellency is not effectively improved. In contrast, when it exceeds 5.0 parts by weight, the dispersibility of the fluororesin into the inside of the porous membrane is decreased. Due to this, the surface of the gas diffusion electrode is uneven, and a gap between the gas diffusion electrode and an adjacent layer (for example, the catalyst layer) is generated. Thereby, gas diffusion ability easily decreases. In other words, when the weight part of the carbon material fiber used is out of that range, fuel cell performance is easily degraded.

In addition, it is more preferable that the carbon material particles be used together with the carbon material fibers. Any carbon material particles can be used. For example, the abovementioned carbon material particles can be used. The preferable carbon material particles used in the first preferable gas diffusion electrode are also the same those explained above.

The weight ratio between the fluororesin and the carbon material particles is preferably in a range of from 0.1 parts by weight to 3 parts by weight, more preferably in a range of from 0.3 parts by weight to 1.5 parts by weight of the carbon material particles, relative to 1 part by weight of the porous fluororesin. When the ratio of the carbon material particles is less than 0.1 parts by weight, the carbon material fibers maintain conductivity but the conductivity of the gas diffusion layer easily decreases. In contrast, when it exceeds 3 parts by weight, many carbon material particles are filled in the porous membrane, and the gas diffusion ability easily decreases. In other words, when the weight part of the carbon material particles used is out of that range, fuel cell performance is easily degraded.

In addition, it is preferable that the carbon material particles be added in a range of from 0 part by weight to 3.1 parts by weight relative to 1 part by weight of the carbon material fibers.

The second preferable gas diffusion electrode is explained below.

The second preferable gas diffusion electrode includes the porous fluororesin containing the carbon material, and uses the nonwoven fabric as a structure holding material (a material for preventing pores from crushing). In the second preferable gas diffusion electrode, the nonwoven fabric is covered with the porous fluororesin. In particular, the characteristic feature of the second preferable gas diffusion electrode is that polytetrafluoroethylene particles are included in addition to the nonwoven fabric, the porous fluororesin, and the carbon material. The polytetrafluoroethylene particles are fixed at the surface of the fibers included in the nonwoven fabric. Therefore, it is possible to improve the water repellency of the fibers at the surface of the nonwoven fabric. That is, it is possible to obtain the effect which is substantially equal to improvement of the water repellency of the nonwoven fabric itself.

In order to make the surface of the fibers of the nonwoven fabric water repellent, a dispersion solution containing the polytetrafluoroethylene particles is permeated or coated into the nonwoven fabric, and thereby the polytetrafluoroethylene particles are fixed. In addition, after mixing the polytetrafluoroethylene particles in a coating solution containing the porous fluororesin, the mixture may be permeated or coated into the nonwoven fabric.

It is preferable that the polytetrafluoroethylene particles used have the particle diameter of 1 $\mu$m or less. The conditions of the polytetrafluoroethylene particles are not particularly limited. However, it is preferable that so-called "a dispersion (dispersion solution)" in which polytetrafluoroethylene particles are dispersed in an alcohol or a surfactant. For example, a dispersion of polytetrafluoroethylene having a particle diameter of about 400 nm, trade name, 31-JR, marketed by Du Pont Mitsui Fluorochemicals, can be used.

The weight ratio between the porous fluororesin and the polytetrafluoroethylene particles is preferably in a range of from 0.1 to 3 parts by weight, more preferably in a range of from 0.3 to 1.5 parts by weight, relative to 1 part by weight of the porous fluororesin. When the content of the polytetrafluoroethylene particles is less than 0.1 parts by weight, sufficient water repellency cannot be obtained. In contrast, when the content thereof exceeds 3 parts by weight, many polytetrafluoroethylene particles are filled in the porous membrane, and the gas diffusion ability is easily decreased. In other words, when the weight part of the polytetrafluoroethylene particles used is out of that range, fuel cell performance can easily be degraded.

In the second preferable gas diffusion electrode, the ratio between the carbon material and the porous fluororesin is preferably in a range of from 0.1 parts by weight to 3 parts by weight of the carbon material, relative to 1 part by weight of the porous fluororesin, and more preferably in a range of from 0.3 parts by weight to 1.5 parts by weight. When the ratio of the carbon material is less than 0.1 parts by weight, sufficient conductivity can not be obtained for a long time. In contrast, when it exceeds 3 parts by weight, much carbon material is filled in the porous membrane, and the gas diffusion ability be easily decreased. In other words, when the weight part of the carbon material used is out of that range, fuel cell performance is easily degraded.

Examples

The present invention is explained in detail with reference to Examples. In the following, the gas diffusion electrode was produced, and then the polymer electrolyte fuel cell was obtained by arranging the produced gas diffusion electrode on both the fuel electrode side and the oxygen side. After that, the produced polymer electrolyte fuel cell was evaluated.

Production of the Gas Diffusion Electrode

Examples 1 to 12

30 parts by weight of fluorinated vinylidene resin was dissolved in 600 parts by weight of 1-methyl-2-pyrolidone, and acetylene black having an average primary particle diameter of 40 nm was dispersed to obtain a solvent mixture in accordance with the amount in Table 1. Then, 45 parts by weight of diethylene glycol was mixed and stirred to produce a fluororesin solution.

The obtained fluororesin solution was coated and impregnated with an applicator into a polyarylate nonwoven fabric having a thickness in a range of from 22 to 65 $\mu$m. After drying, a gas diffusion electrode before heat press was obtained in Examples 1 to 12.

Moreover, any substrate was not arranged at both sides of the polyarylate nonwoven fabric while drying.

Example 13

30 parts by weight of fluorinated vinylidene resin was dissolved in 600 parts by weight of 1-methyl-2-pyrolidone, and acetylene black having an average primary particle diameter of 40 nm and carbon material fibers having an aspect ratio in a range of 10 to 500 were dispersed to obtain a solvent mixture in accordance with the amount in Table 1. Then, 45 parts by weight of diethylene glycol was mixed and stirred to produce a fluororesin solution.

The obtained fluororesin solution was coated and permiated with an applicator into a polyarylate nonwoven fabric having a thickness of 41 $\mu$m. After drying, the gas diffusion electrode before heat press was obtained in Example 13.

Moreover, any substrate was not arranged at both sides of the polyarylate nonwoven fabric while drying.

Example 14

30 parts by weight of fluorinated vinylidene resin was dissolved in 600 parts by weight of 1-methyl-2-pyrolidone, and carbon material fibers having an aspect ratio in a range of from 10 to 500 were dispersed to obtain a solvent mixture in accordance with the amount in Table 1. Then, 45 parts by weight of diethylene glycol was mixed and stirred to produce a fluororesin solution.

The obtained fluororesin solution was coated and permeated with an applicator into a polyarylate nonwoven fabric having a thickness of 41 μm. After drying, the gas diffusion electrode before heat press was obtained in Example 14.

Moreover, any substrate was not arranged at both sides of the polyarylate nonwoven fabric while drying.

In addition, the lots of the nonwoven fabric used in Examples 1 to 4, 5 to 8, 9 to 12 and 13 to 14, are each different. Therefore, the gas diffusion electrode and the porosity are also different.

Comparative Examples 1 to 4

In Comparative Examples 1 to 4, the nonwoven fabric was not used, and the gas diffusion electrode was produced using only the fluororesin 11 as shown in FIG. 4. FIG. 4 is a cross sectional view showing the gas diffusion electrode in Comparative Examples.

Specifically, the gas diffusion electrode was produced by the following processes.

30 parts by weight of fluorinated vinylidene resin was dissolved in 600 parts by weight of 1-methyl-2-pyrolidone, and acetylene black having an average primary particle diameter of 40 nm was dispersed to obtain a solvent mixture in accordance with the amount in Table 1. Then, 45 parts by weight of diethylene glycol was added to the solvent mixture and stirred to produce a fluororesin solution.

The obtained fluororesin solution was coated with an applicator into a polyethylene naphthalate film (PEN). After drying, a gas diffusion electrode before heat press was obtained in Comparative Examples 1 to 4.

Moreover, the fluororesin solution was dried together with the polyethylene naphthalate film (PEN).

Measurement of Physical Properties and Confirmation Test for Pore Crush

The mass per unit area in the gas diffusion electrode produced in Examples 1 to 14, and Comparative Examples 1 to 4 was measured.

The density was calculated from the measured mass, and the porosity was further calculated from the density.

Then, the thickness of the gas diffusion electrode before heat press was measured. In order to confirm the pore crush generated by the heat press, after the heat press of the polyethylene naphthalate film (PEN) at 120°C, 10 MPa, for 10 minutes, the thickness of the gas diffusion electrode was also measured.

Then, the rate of thickness change (%) was calculated by the following formula.

Rate of thickness change (%) = {(thickness of the gas diffusion electrode before heat press - thickness of the gas diffusion electrode after heat press) / thickness of the gas diffusion electrode before heat press} x 100

The results are shown in Table 1.

Table 1

| | Thickness of nonwoven fabric ($\mu$m) | Content of acetylene black to 1 part by weight of fluororesin (part by weight) | Content of carbon material fibers to 1 part by weight of fluororesin (part by weight) | Density (g/cm$^3$) | Porosity (%) | Thickness before heat press ($\mu$m) | Thickness after heat press ($\mu$m) | Thickness change percentage (%) |
|---|---|---|---|---|---|---|---|---|
| Example 1 | 22 | 0.92 | 0 | 0.433 | 74.5 | 26.6 | 26.2 | 1.5 |
| Example 2 | 36 | 0.92 | 0 | 0.451 | 73.4 | 38.9 | 38.2 | 1.8 |
| Example 3 | 41 | 0.92 | 0 | 0.472 | 72.2 | 44.2 | 42.5 | 3.8 |
| Example 4 | 65 | 0.92 | 0 | 0.475 | 72.0 | 70.1 | 66.5 | 5.1 |
| Example 5 | 22 | 0.92 | 0 | 0.461 | 72.0 | 26.0 | 25.9 | 0.4 |
| Example 6 | 36 | 0.92 | 0 | 0.479 | 70.9 | 39.2 | 38.1 | 2.8 |
| Example 7 | 41 | 0.92 | 0 | 0.499 | 69.7 | 44.1 | 42.4 | 3.9 |
| Example 8 | 65 | 0.92 | 0 | 0.510 | 69.0 | 69.9 | 66.3 | 5.4 |
| Example 9 | 22 | 0.92 | 0 | 0.502 | 68.2 | 26.4 | 26.1 | 1.1 |
| Example 10 | 36 | 0.92 | 0 | 0.518 | 67.1 | 39.2 | 38.1 | 2.8 |
| Example 11 | 41 | 0.92 | 0 | 0.538 | 65.9 | 44.1 | 42.5 | 3.6 |
| Example 12 | 65 | 0.92 | 0 | 0.540 | 65.7 | 70.2 | 66.6 | 5.1 |
| Example 13 | 41 | 0.46 | 0.46 | 0.468 | 72.5 | 44.5 | 44.1 | 0.9 |
| Example 14 | 41 | 0 | 0.92 | 0.465 | 72.9 | 45.0 | 44.8 | 0.4 |
| Comparative Example 1 | - | 0.92 | 0 | 0.324 | 82.7 | 25.0 | 16.3 | 34.1 |
| Comparative Example 2 | - | 0.92 | 0 | 0.351 | 81.2 | 39.0 | 25.4 | 34.9 |
| Comparative Example 3 | - | 0.92 | 0 | 0.371 | 80.2 | 44.0 | 28.6 | 35.0 |
| Comparative Example 4 | - | 0.92 | 0 | 0.377 | 79.8 | 70.0 | 45.5 | 35.0 |

Production of the First Polymer Electrolyte Fuel Cell

(1) Production of a polymer electrolyte fuel cell

The membrane-electrode assembly was produced by the following first production method, and the polymer electrolyte fuel cell was obtained.

First, the obtained gas diffusion electrode in Examples 1 to 14 and Comparative Examples 1 to 4 was cut to 50 mm x 50 mm, and two test pieces were produced in each Example and Comparative Example.

A coating solution for a catalyst layer, which contains platinum catalyst-supported carbon, an ion conductive resin, and a solvent mixture containing water and ethanol, was coated to the two test pieces and dried to produce a catalyst layer. Thereby, the gas diffusion electrode having the catalyst layer was produced.

The content of the platinum catalyst was 0.3 mg/cm$^2$.

Then, the gas diffusion electrode having the catalyst layer was arranged to a polymer electrolyte membrane (marketed by DuPont, trade name: NAFION ® 117) such that the catalyst layer contacted to the polymer electrolyte membrane. After that, the gas diffusion electrode having the catalyst layer and the polymer electrolyte membrane were joined by heat press at 120°C, 10 MPa, for 10 minutes. Moreover, the PEN film, which was used as a substrate in the gas diffusion electrode in Comparative Examples 1 to 4, was peeled at this stage. Thereby, the membrane-electrode assembly was produced.

A carbon paper was arranged on both sides of the produced membrane-electrode assembly, and a separator made of black lead was further arranged on the carbon papers. Thereby, a cell was obtained. Then, the polymer electrolyte fuel cell in Examples 1-1, 2-1, 3-1... 14-1, Comparative Examples 1-1, 2-1, 3-1, and 4-1 was produced by using the obtained cell.

(2) Production of a polymer electrolyte fuel cell

The membrane-electrode assembly was produced by the following second production method, and the polymer electrolyte fuel cell was obtained.

First, the obtained gas diffusion electrode in Examples 1 to 14 and Comparative Examples 1 to 4 was cut to 50 mm x 50 mm, and two test pieces were produced in each Example and Comparative Example.

A coating solution for a catalyst layer, which contains platinum catalyst-supported carbon, an ion conductive resin, and a solvent mixture containing water and ethanol, was coated to the both sides of the polymer electrolyte membrane (marketed by DuPont, trade name: NAFION ® 117) and dried to produce the catalyst layer. Thereby, the polymer electrolyte membrane having the catalyst layer was produced.

The content of the platinum catalyst was 0.3 mg/cm$^2$.

Then, the gas diffusion electrodes in Examples and Comparative Examples were arranged to a polymer electrolyte membrane having the catalyst layer such that the gas diffusion electrode contacted to the catalyst layer. After that, the gas diffusion electrode and the polymer electrolyte membrane having the catalyst layer were joined by heat press at 120°C, 10 MPa, for 10 minutes. Moreover, the PEN film, which was used as a substrate in the gas diffusion electrode in Comparative Examples 1 to 4, was peeled at this stage. Thereby, the membrane-electrode assembly was produced.

A carbon paper was arranged on the both sides of the produced membrane-electrode assembly, and a separator made of black lead was further arranged on the carbon papers. Thereby, a cell was obtained. Then, the polymer electrolyte fuel cell in Examples 1-2, 2-2, 3-2... 14-2, Comparative Examples 1-2, 2-2, 3-2, and 4-2 was produced by using the obtained cell.

Evaluation of the First Polymer Electrolyte Fuel Cell

The electric generation properties of the polymer electrolyte fuel cell in Examples and Comparative Examples were evaluated as follows.

As the feed gas of the polymer electrolyte fuel cell, hydrogen gas was used to the fuel electrode side, and oxygen gas was used to the oxygen electrode side. The hydrogen gas was supplied with moisture, at 85°C, 500 mL/min., and 0.1 MPa. The oxygen gas was supplied with moisture at 70°C, 1,000 mL/min., and 0.1 MPa. Under the condition, voltage of the obtained polymer electrolyte fuel cell, when current density was 1 A/cm$^2$, was measured. Moreover, there is no problems in practical use when the measured voltage is 0.65 V or more.

The results are shown in Table 2.

Table 2

|  | Voltage (V) |  | Voltage (V) |
|---|---|---|---|
| Example 1-1 | 0.66 | Example 1-2 | 0.67 |
| Example 2-1 | 0.67 | Example 2-2 | 0.68 |
| Example 3-1 | 0.72 | Example 3-2 | 0.73 |
| Example 4-1 | 0.67 | Example 4-2 | 0.66 |
| Example 5-1 | 0.66 | Example 5-2 | 0.67 |
| Example 6-1 | 0.67 | Example 6-2 | 0.66 |
| Example 7-1 | 0.72 | Example 7-2 | 0.71 |
| Example 8-1 | 0.67 | Example 8-2 | 0.66 |
| Example 9-1 | 0.67 | Example 9-2 | 0.68 |
| Example 10-1 | 0.66 | Example 10-2 | 0.65 |
| Example 11-1 | 0.69 | Example 11-2 | 0.68 |
| Example 12-1 | 0.65 | Example 12-2 | 0.65 |
| Example 13-1 | 0.73 | Example 13-2 | 0.74 |
| Example 14-1 | 0.74 | Example 14-2 | 0.74 |
| Comparative Example 1-1 | 0.60 | Comparative Example 1-2 | 0.61 |
| Comparative Example 2-1 | 0.61 | Comparative Example 2-2 | 0.61 |
| Comparative Example 3-1 | 0.62 | Comparative Example 3-2 | 0.62 |
| Comparative Example 4-1 | 0.58 | Comparative Example 4-2 | 0.59 |

As shown in Table 2, the polymer electrolyte fuel cell in Examples 1-1 to 14-1, 1-2 to 14-2 has the voltage of 0.65 V or more. They have excellent electric generation properties and cause no problems in practical use.

It is thought that the reasons for obtaining such excellent electric generation properties are that when the gas diffusion electrode of the present invention is used, excellent water repellency and gas diffusion properties can be maintained, sufficient strength for preventing the generation of pore crush can also maintained, and due to this, excellent fuel cell properties can be maintained.

In addition, it is also thought that since there is no nonwoven fabric at the surface of the gas diffusion electrode of the present invention, and the surface of the gas diffusion electrode of the present invention is smooth, due to this, the gas diffusion electrode does not damage the catalyst layer and the polymer electrolyte membrane. Therefore, the gas diffusion electrode has high adhesion to the catalyst layer, and there is no gap between the gas diffusion electrode and the catalyst layer, and water does not accumulate in the gap.

Furthermore, the polymer electrode fuel cell in the Examples 13-1, 14-1, 13-2, and 14-2 has especially high electric generation properties, because these have a voltage of 0.73 V or greater. It is thought that this excellent result is obtained by the effects of the carbon material fibers.

In contrast, the polymer electrode fuel cell in the Comparative Examples 1-1 to 4-1, and Comparative Examples 1-2 to 4-2 has a low voltage, such as less than 0.65 V. These cause problems in practical use.

It is thought that this problem is caused by inferior strength of the gas diffusion electrode, and pore crush may be generated during the heat press.

Production of the Gas Diffusion Electrode

Examples 15 to 32

30 parts by weight of fluorinated vinylidene resin was dissolved in 600 parts by weight of 1-methyl-2-pyrolidone, and acetylene black having an average primary particle diameter of 40 nm and carbon material fibers having an aspect ratio in a range of 10 to 500 were dispersed to obtain a solvent mixture in accordance with the amount in Table 3. Then, 45 parts by weight of diethylene glycol was mixed and stirred to produce a coating.

The obtained coating was coated and impregnated with an applicator into a polyarylate nonwoven fabric. After drying, the gas diffusion electrode including the porous membrane having a thickness shown in Table 3 before heat press was obtained.

Comparative Examples 5 to 7

30 parts by weight of fluorinated vinylidene resin was dissolved in 600 parts by weight of 1-methyl-2-pyrolidone, and acetylene black having an average primary particle diameter of 40 nm was dispersed to obtain a solvent mixture in accordance with the amount in Table 3. Then, 45 parts by weight of diethylene glycol was mixed and stirred to produce a coating.

The obtained coating was coated with an applicator to the polyethylene naphthalate (PEN) film. After drying, the comparative gas diffusion electrode including the porous membrane having a thickness before heat press shown in Table 3 was obtained.

Measurement of Physical Properties and Confirmation Test for Pore Crush

Similar to the methods which are explained above, the physical properties were measured and the confirmation test for pore crush was carried out. The results are shown in Table 3.

Moreover, the contact angle was measured by dropping 2 μL of pure water on the gas diffusion electrode, and measuring the angle just after the contact of water to the gas diffusion electrode.

It is clear from the results of the thickness change percentage in Table 3 that the gas diffusion electrode has small change percentages, such as 0.4 to 1.9% in Examples 15 to 32. The results show that since the nonwoven fabric in the gas diffusion electrode has superior compressive resistance, the pores of the porous fluorinated vinylidene resin in the pores in the nonwoven fabric were protected by the nonwoven fabric, and not crushed by the heat press. In contrast, the gas diffusion electrode in Comparative Examples 5 to 7, which did not use the nonwoven fabric, had the thickness change percentage in a range of from 34.8 to 35%. This result shows that the pores of the porous fluorinated vinylidene resin were crushed by the heat press.

In addition, the contact angle of the gas diffusion electrode in Examples 15 to 32 was in a range of from 136 to 160°. In contrast, the contact angle of the gas diffusion electrode in Comparative Examples 5 to 7 was in a range of from 133 to 134°. It was confirmed that the gas diffusion electrode in Examples has superior water repellency to that of the gas diffusion electrode in Comparative Examples.

Table 3

| | Content of acetylene black to 1 part by weight of fluorinated vinylidene resin (part by weight) | Content of carbon material fibers to 1 part by weight of fluorinated vinylidene resin (part by weight) | Thickness before heat press (μm) | Thickness after heat press (μm) | Thickness change percentage (%) | Porosity (%) | Contact angle (°) |
|---|---|---|---|---|---|---|---|
| Example 15 | 0.92 | 0.30 | 26.1 | 25.8 | 1.1 | 82.0 | 138 |
| Example 16 | 0.92 | 0.30 | 39.7 | 39.2 | 1.3 | 79.4 | 137 |
| Example 17 | 0.92 | 0.30 | 70.4 | 69.8 | 0.9 | 78.6 | 138 |
| Example 18 | 0.92 | 0.92 | 25.5 | 25.2 | 1.2 | 83.2 | 141 |
| Example 19 | 0.92 | 0.92 | 40.5 | 40.1 | 1.0 | 82.7 | 142 |
| Example 20 | 0.92 | 0.92 | 70.1 | 69.5 | 0.9 | 81.3 | 142 |
| Example 21 | 0.92 | 2.8 | 25.8 | 25.6 | 0.8 | 84.3 | 150 |
| Example 22 | 0.92 | 2.8 | 38.9 | 38.5 | 1.0 | 83.5 | 151 |
| Example 23 | 0.92 | 2.8 | 69.4 | 69.1 | 0.4 | 81.1 | 151 |
| Example 24 | 0.92 | 5.0 | 26.6 | 26.4 | 0.8 | 85.8 | 159 |

(continued)

|  | Content of acetylene black to 1 part by weight of fluorinated vinylidene resin (part by weight) | Content of carbon material fibers to 1 part by weight of fluorinated vinylidene resin (part by weight) | Thickness before heat press ($\mu$m) | Thickness after heat press ($\mu$m) | Thickness change percentage (%) | Porosity (%) | Contact angle (°) |
|---|---|---|---|---|---|---|---|
| Example 25 | 0.92 | 5.0 | 39.8 | 39.5 | 0.8 | 84.4 | 159 |
| Example 26 | 0.92 | 5.0 | 69.5 | 69.2 | 0.4 | 82.7 | 160 |
| Example 27 | 0 | 0.30 | 26.1 | 25.6 | 1.9 | 82.5 | 136 |
| Example 28 | 0 | 0.30 | 40.0 | 39.4 | 1.5 | 81.3 | 137 |
| Example 29 | 0 | 0.30 | 70.1 | 69.4 | 1.0 | 80.1 | 137 |
| Example 30 | 0 | 5.0 | 25.6 | 25.3 | 1.2 | 86.0 | 158 |
| Example 31 | 0 | 5.0 | 38.5 | 38.2 | 0.8 | 85.1 | 157 |
| Example 32 | 0 | 5.0 | 71.2 | 70.7 | 0.7 | 83.9 | 158 |
| Comparative Example 5 | 0.92 | 0 | 25.0 | 16.3 | 34.8 | 82.7 | 133 |
| Comparative Example 6 | 0.92 | 0 | 39.0 | 25.4 | 34.9 | 81.2 | 133 |
| Comparative Example 7 | 0.92 | 0 | 70.0 | 45.5 | 35.0 | 79.8 | 134 |

Production of the Second Polymer Electrolyte Fuel Cell

(3) Production of a polymer electrolyte fuel cell

The obtained gas diffusion electrode in Examples 15 to 32 and Comparative Examples 5 to 7 was cut to 50 mm x 50 mm, and two test pieces were produced in each Example and Comparative Example.

A coating solution for a catalyst layer, which contains platinum catalyst-supported carbon, an ion conductive resin, and a solvent mixture containing water and ethanol, was coated to the two test pieces and dried to produce a catalyst layer. Thereby, the gas diffusion electrode having the catalyst layer was produced.

The content of the platinum catalyst was 0.3 mg/cm$^2$.

Then, the gas diffusion electrode having the catalyst layer was arranged to a polymer electrolyte membrane (marketed by DuPont, trade name: NAFION ® 117) such that the catalyst layer contacted to the polymer electrolyte membrane. After that, the gas diffusion electrode having the catalyst layer and the polymer electrolyte membrane were joined by heat press at 120°C, 10 MPa, for 10 minutes. Moreover, the PEN film, which was used as a substrate in the gas diffusion electrode in Comparative Examples 5 to 7, was peeled at this stage. Thereby, the membrane-electrode assembly was produced.

A carbon paper was arranged on the both sides of the produced membrane-electrode assembly, and a separator made of black lead was further arranged on the carbon papers. Thereby, a cell was obtained. Then, the polymer electrolyte fuel cell in Examples 15-1, 16-1, 17-1... 32-1, Comparative Examples 5-1 to 7-1 was produced by using the obtained cell.

(4) Production of a polymer electrolyte fuel cell

The obtained gas diffusion electrode in Examples 15 to 32 and Comparative Examples 5 to 7 was cut to 50 mm x 50 mm, and two test pieces were produced in each Example and Comparative Example.

A catalyst coating solution for a catalyst layer, which contains platinum catalyst-supported carbon, an ion conductive resin, and a solvent mixture containing water and ethanol, was coated to the both sides of the polymer electrolyte membrane (marketed by DuPont, trade name: NAFION ® 117) and dried to produce the catalyst layer. Thereby, the polymer electrolyte membrane having the catalyst layer was produced.

The content of the platinum catalyst was 0.3 mg/cm$^2$.

Then, the gas diffusion electrode in Examples and Comparative Examples was arranged to a polymer electrolyte membrane having the catalyst layer such that the gas diffusion electrode contacted to the catalyst layer. After that, the gas diffusion electrode and the polymer electrolyte membrane having the catalyst layer were joined by heat press at 120°C, 10 MPa, for 10 minutes. Moreover, the PEN film, which was used as a substrate in the gas diffusion electrode in Comparative Examples 1 to 4, was peeled at this stage. Thereby, the membrane-electrode assembly was produced.

A carbon paper was arranged on the both sides of the produced membrane-electrode assembly, and a separator made of black lead was further arranged on the carbon papers. Thereby, a cell was obtained. Then, the polymer electrolyte fuel cell in Examples 15-2, 16-2, 17-2... 32-2, Comparative Examples 5-2 to 7-2 was produced by using the obtained cell.

Evaluation of the Second Polymer Electrolyte Fuel Cell

The electric generation properties of 42 polymer electrolyte fuel cells each of which was obtained in Examples 15-1 to 32-1, Comparative Example 5-1 to 7-1; Examples 15-2 to 32-2, and Comparative Examples 5-2 to 7-2, were evaluated as follows.

As the feed gas of the polymer electrolyte fuel cell, hydrogen gas was used to the fuel electrode side, and oxygen gas was used to the oxygen electrode side. The hydrogen gas was supplied with moisture at 85°C, 500 mL/min., and 0.1 MPa. The oxygen gas was supplied with moisture, at 70°C, 1,000 mL/min., and 0.1 MPa. Under the condition, voltage of the obtained polymer electrolyte fuel cell when current density was 1 A/cm$^2$ was measured. Moreover, there is no problem in practical use when the measured voltage is 0.65 V or more.

The results are shown in Table 4.

Table 4

|  | Voltage (V) |  | Voltage (V) |
| --- | --- | --- | --- |
| Example 15-1 | 0.66 | Example 15-2 | 0.66 |
| Example 16-1 | 0.66 | Example 16-2 | 0.67 |
| Example 17-1 | 0.67 | Example 17-2 | 0.68 |
| Example 18-1 | 0.68 | Example 18-2 | 0.69 |
| Example 19-1 | 0.69 | Example 19-2 | 0.70 |
| Example 20-1 | 0.70 | Example 20-2 | 0.71 |
| Example 21-1 | 0.73 | Example 21-2 | 0.74 |
| Example 22-1 | 0.73 | Example 22-2 | 0.74 |
| Example 23-1 | 0.74 | Example 23-2 | 0.75 |
| Example 24-1 | 0.69 | Example 24-2 | 0.69 |
| Example 25-1 | 0.69 | Example 25-2 | 0.70 |
| Example 26-1 | 0.69 | Example 26-2 | 0.69 |
| Example 27-1 | 0.65 | Example 27-2 | 0.66 |
| Example 28-1 | 0.66 | Example 28-2 | 0.66 |
| Example 29-1 | 0.65 | Example 29-2 | 0.66 |
| Example 30-1 | 0.70 | Example 30-2 | 0.69 |
| Example 31-1 | 0.72 | Example 31-2 | 0.71 |
| Example 32-1 | 0.69 | Example 32-2 | 0.70 |
| Comparative Example 5-1 | 0.60 | Comparative Example 5-2 | 0.61 |
| Comparative Example 6-1 | 0.61 | Comparative Example 6-2 | 0.61 |
| Comparative Example 7-1 | 0.58 | Comparative Example 7-2 | 0.59 |

As shown in Table 4, the polymer electrolyte fuel cell (15-1 to 32-1, and 15-2 and 32-2) in Examples 15 to 32 has a voltage in the range of from 0.65 V to 0.75V. In contrast, the comparative polymer electrolyte fuel cell (5-1 to 7-1, and 5-2 and 7-2) in Comparative Examples 5 to 7 has a voltage in the range of from 0.58 V to 0.61V. That is, the polymer electrolyte fuel cell in Examples has a higher voltage than that of the polymer electrolyte fuel cell in Comparative Examples. That is, the polymer electrolyte fuel cell in Examples has superior electric generation properties.

The reasons for obtaining such excellent electric generation properties are that as shown in the results of thickness change percentage in Table 3, the pores in the porous fluororesin membrane comprising only the carbon material fibers or the porous fluororesin membrane comprising the carbon material fibers and the carbon material particles were hardly crushed by using the nonwoven fabric as a reinforcing material during the heat press in producing the membrane-electrode assembly. In addition, the water repellency was improved by the effects of the carbon material fibers, and thereby water discharge ability was also improved. Due to this, flooding, which is generated by water for humidification during operation of the fuel cell, or water produced by the electrode reaction, could be prevented. Therefore, the gas permeability was improved, and the fuel cell performance, such as electric power generation properties of the polymer electrolyte fuel cell comprising the gas diffusion electrode of the present invention, was also improved.

Production of the Gas Diffusion Electrode

Examples 33 to 40

30 parts by weight of fluorinated vinylidene resin was dissolved in 600 parts by weight of 1-methyl-2-pyrolidone, and polytetrafluoroethylene particles having an average primary particle diameter of 300 nm was dispersed in accordance with the amount in Table 5. Then, 45 parts by weight of acetylene black was also mixed to obtain a solvent mixture, in accordance with Table 5. After that, 45 parts by weight of diethylene glycol was further mixed and stirred to produce a coating.

The obtained coating was coated with an applicator into a polyarylate nonwoven fabric. After drying, the third gas diffusion electrode comprising the porous membrane having a thickness before heat press as shown in Table 5 was obtained in Examples 33 to 40.

Example 41

A polyarylate nonwoven fabric was immersed into a water dispersant containing a surfactant and polytetrafluoroethylene particles having a primary particle diameter of 300 nm, and an adjusted concentration as shown in Table 5. After drying, the polytetrafluoroethylene particles were fixed into the polyarylate nonwoven fabric.

At the same time, 30 parts by weight of fluorinated vinylidene resin were dissolved in 600 parts by weight of 1-methyl-2-pyrolidone, and acetylene black having an average primary particle diameter of 40 nm was stirred in accordance with Table 5 to obtain a solvent mixture. Then, 45 parts by weight of diethylene glycol was mixed and stirred to produce a coating.

The obtained coating was coated and impregnated with an applicator into a polyarylate nonwoven fabric into which the polytetrafluoroethylene particles were fixed. After drying, the gas diffusion electrode comprising the porous membrane having a thickness before heat press shown in Table 5 was obtained in Example 41.

Comparative Examples 8 to 11

30 parts by weight of fluorinated vinylidene resin were dissolved in 600 parts by weight of 1-methyl-2-pyrolidone, and acetylene black having an average primary particle diameter of 40 nm was dispersed to obtain a solvent mixture in accordance with Table 5. Then, 45 parts by weight of diethylene glycol was mixed and stirred to produce a coating.

The obtained coating was coated with an applicator to the polyethylene naphthalate (PEN) film. After drying, the comparative gas diffusion electrode including the porous membrane having a thickness before heat press shown in Table 5 was obtained.

Measurement of Physical Properties and Confirmation Test for Pore Crush

Similar to the methods which are explained above, the weight of the gas diffusion electrode per unit, the thickness before and after heat press, the thickness change percentage, and pores percentage in Examples 33 to 41 and Comparative Examples 8 to 11 were measured. The results are shown in Table 5.

As shown "Thickness change percentage" in Table 5, the gas diffusion electrode in Examples 33 to 41 had small change percentage, such as 1.5 to 5.1%. This shows that since the nonwoven fabric in the gas diffusion electrode has excellent compressive resistance, the pores made of the porous fluorinated vinylidene in the pores in the nonwoven fabric were protected by the nonwoven fabric, and the pores were not crushed by the heat press. In contrast, the gas diffusion electrode having no nonwoven fabric had the thickness change percentage in a range of from 34.8 to 35% in Comparative Examples 8 to 11. This shows that the pores in the porous fluorinated vinylidene were crushed by the heat press.

[Table 5]

| | Content of polytetrafluoroethylene particles to 1 part by weight of fluorinated vinylidene resin (part by weight) | Content of acetylene black to 1 part by weight of fluorinated vinylidene resin (part by weight) | Density (g/cm$^3$) | Thickness before heat press ($\mu$m) | Thickness after heat press ($\mu$m) | Thickness change percentage (%) | Porosity (%) |
|---|---|---|---|---|---|---|---|
| Example 33 | 0.05 | 0.92 | 0.277 | 26.6 | 26.2 | 1.5 | 85.0 |
| Example 34 | 0.05 | 0.92 | 0.276 | 38.9 | 38.2 | 1.8 | 85.1 |
| Example 35 | 0.05 | 0.92 | 0.282 | 44.2 | 42.5 | 3.8 | 84.8 |
| Example 36 | 0.05 | 0.92 | 0.283 | 70.1 | 66.5 | 5.1 | 84.7 |
| Example 37 | 0.20 | 0.92 | 0.426 | 26.8 | 26.5 | 1.1 | 77.1 |
| Example 38 | 0.20 | 0.92 | 0.428 | 39.5 | 38.9 | 1.5 | 77.0 |
| Example 39 | 0.20 | 0.92 | 0.422 | 45.2 | 43.8 | 3.1 | 77.3 |
| Example 40 | 0.20 | 0.92 | 0.432 | 71.2 | 68.1 | 4.4 | 76.8 |
| Example 41 | 0.20 | 0.92 | 0.424 | 46.2 | 44.6 | 3.5 | 77.2 |
| Comparative Example 8 | 0 | 0.92 | 0.324 | 25.0 | 16.3 | 34.8 | 82.7 |
| Comparative Example 9 | 0 | 0.92 | 0.351 | 39.0 | 25.4 | 34.9 | 81.2 |
| Comparative Example 10 | 0 | 0.92 | 0.371 | 44.0 | 28.6 | 35.0 | 80.2 |
| Comparative Example 11 | 0 | 0.92 | 0.377 | 70.0 | 45.5 | 35.0 | 79.8 |

Production of the Third Polymer Electrolyte Fuel Cell

(5) Production of a polymer electrolyte fuel cell

The obtained gas diffusion electrodes in Examples 33 to 41 and Comparative Examples 8 to 11 was cut to 50 mm x 50 mm, and two test pieces were produced in each Example and Comparative Example.
Similar to the methods disclosed in "(1) Production 1 of a polymer electrolyte fuel cell", the polymer electrolyte fuel cell in Examples 33-1 to 41-1, and Comparative Examples 8-1 and 11-1 was produced.

(6) Production of a polymer electrolyte fuel cell

The obtained gas diffusion electrode in Examples 33 to 41 and Comparative Examples 8 to 11 was cut to 50 mm x 50 mm, and two test pieces were produced in each Example and Comparative Example.
Similar to the methods disclosed in "(2) Production of a polymer electrolyte fuel cell", the polymer electrolyte fuel cell in Examples 33-2 to 41-2, and Comparative Examples 8-2 and 11-2 was produced.

Evaluation of the Third Polymer Electrolyte Fuel Cell

The electric generation properties of 26 polymer electrolyte fuel cells each of which was obtained in Examples 33-1 to 41-1, Comparative Example 8-1 to 11-1; Examples 33-2 to 41-2, and Comparative Examples 8-2 to 11-2, were evaluated, similar to "Evaluation of the Second Polymer Electrolyte Fuel Cell". The results are shown in Table 6.

Table 6

|  | Voltage (V) |  | Voltage (V) |
|---|---|---|---|
| Example 33-1 | 0.66 | Example 33-2 | 0.67 |
| Example 34-1 | 0.67 | Example 34-2 | 0.68 |
| Example 35-1 | 0.72 | Example 35-2 | 0.73 |
| Example 36-1 | 0.67 | Example 36-2 | 0.67 |
| Example 37-1 | 0.67 | Example 37-2 | 0.68 |
| Example 38-1 | 0.68 | Example 38-2 | 0.69 |
| Example 39-1 | 0.73 | Example 39-2 | 0.74 |
| Example 40-1 | 0.68 | Example 40-2 | 0.67 |
| Example 41-1 | 0.74 | Example 41-2 | 0.75 |
| Comparative Example 8-1 | 0.60 | Comparative Example 8-2 | 0.61 |
| Comparative Example 9-1 | 0.61 | Comparative Example 9-2 | 0.61 |
| Comparative Example 10-1 | 0.62 | Comparative Example 10-2 | 0.62 |
| Comparative Example 11-1 | 0.58 | Comparative Example 11-2 | 0.59 |

As shown in Table 6, the polymer electrolyte fuel cell in Examples 33-1 to 41-1, and Examples 33-2 to 41-2 including the gas diffusion electrode obtained in Examples 33 to 41 had the voltage in a range of from 0.66 V to 0.75V. In contrast, the comparative polymer electrolyte fuel cell in Comparative Examples 8-1 to 11-1, and Comparative Examples 8-2 to 11-2 including the gas diffusion electrode obtained in Comparative Examples 8 to 11 had the voltage in a range of from 0.58 V to 0.62V. That is, the polymer electrolyte fuel cell in Examples has high voltage than that of the polymer electrolyte fuel cell in Comparative Examples. That is, the polymer electrolyte fuel cell in Examples has superior electric generation properties to those of the polymer electrolyte fuel cell in Comparative Examples.
The reasons for obtaining such excellent electric generation properties are that as shown in the results of thickness change percentage in Table 6, the pores in the porous fluororesin membrane were hardly crushed by using the nonwoven fabric as a reinforcing material during the heat press in producing the membrane-electrode assembly. Due to this, flooding, which is generated by water for humidification during operation of the fuel cell, or water produced by the electrode reaction, could be prevented. Therefore, the gas permeability is improved, and the fuel cell performance, such as electric power generation properties of the polymer electrolyte fuel cell comprising the gas diffusion electrode of the present invention, is also improved.

In addition, the polymer electrolyte fuel cell (Examples 41-1 and 41-2) including the gas diffusion electrode obtained in Example 41 had particular excellent electric power generation properties. It is thought that the particular excellent electric generation properties were obtained by improving the water repellency of the polyarylate nonwoven fabric due to the polytetrafluoroethylene particles.

INDUSTRIAL APPLICABILITY

According to the present invention, it is possible to provide a gas diffusion electrode for a polymer electrolyte fuel cell, which has excellent water repellency, gas diffusion properties, and strength sufficient for preventing pores from being crushed, and thereby excellent properties for a fuel cell, a membrane-electrode assembly, and the production method therefor, and the polymer electrode fuel cell can be maintained.

**Claims**

1. A gas diffusion electrode comprising a nonwoven fabric, a porous fluororesin, and a carbon material.

2. A gas diffusion electrode according to claim 1, wherein the carbon material is carbon material fibers.

3. A gas diffusion electrode according to claim 2, wherein an aspect ratio of the carbon material fibers is in a range of from 10 to 500.

4. A gas diffusion electrode according to claim 1, wherein the gas diffusion electrode further comprises polytetrafluoroethyelene particles.

5. A gas diffusion electrode according to claim 4, wherein the polytetrafluoroethylene particles are fixed into the nonwoven fabric.

6. A gas diffusion electrode according to claim 1, wherein the nonwoven fabric is covered with the porous fluororesin, and a thickness of the porous fluororesin is thicker than a thickness of the nonwoven fabric.

7. A gas diffusion electrode according to claim 1, wherein the nonwoven fabric comprises polyarylate fibers.

8. A gas diffusion electrode according to claim 1, wherein the fluororesin is a fluorinated olefin resin.

9. A gas diffusion electrode according to claim 1, wherein the carbon material is carbon material particles.

10. A gas diffusion electrode according to claim 1, wherein the carbon material comprises carbon material particles and carbon material fibers.

11. A gas diffusion electrode according to claim 9 or 10, wherein the carbon material particles are carbon black.

12. A gas diffusion electrode according to claim 11, wherein the carbon black is acetylene black.

13. A gas diffusion electrode according to claim 2, wherein a ratio between the carbon material fibers and the porous fluororesin is a range of from 0.30 to 5.0 parts by weight of the carbon material fibers, relative to 1 part by weight of the porous fluororesin.

14. A gas diffusion electrode according to claim 1, wherein the gas diffusion electrode further comprises a conductive porous sheet laminated on the gas diffusion electrode.

15. A membrane-electrode assembly for a polymer electrolyte fuel cell in which the gas diffusion electrode according to any one of claims 1 to 13 is laminated on both sides of a polymer electrolyte membrane via a catalyst layer.

16. A method for producing a membrane-electrode assembly for a polymer electrolyte fuel cell comprising:

after coating or penetrating a fluororesin solution, in which a carbon material is dispersed, to a nonwoven fabric and drying to form a porous membrane;

a first step of forming a catalyst layer on the porous membrane to form a gas diffusion electrode having the catalyst layer; and

a second step of arranging the catalyst layer of the gas diffusion electrode having the catalyst layer on both sides of a polymer electrolyte membrane, and joining the gas diffusion electrode having the catalyst layer and the polymer electrolyte membrane.

17. A method for producing a membrane-electrode assembly for a polymer electrolyte fuel cell comprising:

a first step of forming a catalyst layer on both sides of a porous membrane to form a polymer electrolyte membrane having the catalyst layers; and

a second step for coating or penetrating a fluororesin solution, in which a carbon material is dispersed, to a nonwoven fabric, and drying it to form a gas diffusion electrode made of a porous membrane, arranging the gas diffusion electrode to the polymer electrolyte membrane such that the gas diffusion electrode contacts to the catalyst layer of the polymer electrolyte membrane.

18. A polymer electrolyte fuel cell in which the gas diffusion electrode according to any one of claims 1 to 11 is provided on both sides of the polymer electrolyte membrane via the catalyst layer, and a separator is further provided on the outsides of the gas diffusion electrode.

*FIG. 1*

*FIG. 2*

*FIG. 3*

*FIG. 4*

## INTERNATIONAL SEARCH REPORT

| | International application No. |
|---|---|
| | PCT/JP2008/053044 |

**A. CLASSIFICATION OF SUBJECT MATTER**
*H01M4/96*(2006.01)i, *H01M4/88*(2006.01)i, *H01M8/02*(2006.01)i, *H01M8/10*
(2006.01)i

According to International Patent Classification (IPC) or to both national classification and IPC

**B. FIELDS SEARCHED**

Minimum documentation searched (classification system followed by classification symbols)
H01M4/96, H01M4/88, H01M8/02, H01M8/10

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2002-313359 A  (Mitsubishi Heavy Industries, Ltd.), | 1,2,4,5, 8-11,14,15, 17,18 |
| | 25 October, 2002 (25.10.02), | |
| Y | Claims; Par. Nos. [0020] to [0026]; Fig. 1 | 3,6,12,13, 16-18 |
| | (Family: none) | |
| A | | 7 |
| X | JP 2002-352807 A  (Toray Industries, Inc.), | 1,2,4,5, 8-12,14,15 |
| | 06 December, 2002 (06.12.02), | |
| Y | Claims; Par. Nos. [0001], [0018], [0023] to [0039]; Figs. 1, 2 | 3,6,12,13, 16-18 |
| A | (Family: none) | 7 |

[X] Further documents are listed in the continuation of Box C.   [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search 14 April, 2008 (14.04.08) | Date of mailing of the international search report 01 May, 2008 (01.05.08) |
|---|---|
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2008/053044 |

C (Continuation). DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2006-278037 A (Sanyo Electric Co., Ltd.),<br>12 October, 2006 (12.10.06),<br>Claims; Par. Nos. [0015] to [0021], [0041],<br>[0045]; Figs. 1, 2<br>& US 2006/0240313 A1 | 1,2,4,5,<br>8-11,14-16<br>3,6,12,13,<br>16-18<br>7 |
| X<br>Y<br>A | JP 3-78968 A (Matsushita Electric Industrial<br>Co., Ltd.),<br>04 April, 1991 (04.04.91),<br>Claims; page 2, lower right column, line 16 to<br>page 3, upper left column, line 7; page 4,<br>upper left column, line 13 to page 5, upper<br>left column, line 6; Figs. 1, 2<br>(Family: none) | 1,2,4-6,<br>8-12,14,15<br>3,6,12,13,<br>16-18<br>7 |
| Y<br>A | JP 2006-179292 A (Konica Minolta Holdings,<br>Inc.),<br>06 July, 2006 (06.07.06),<br>Par. Nos. [0022] to [0027]<br>(Family: none) | 3<br>1,2,4-18 |
| Y<br>A | JP 2006-156029 A (The Kansai Electric Power<br>Co., Inc.),<br>15 June, 2006 (15.06.06),<br>Claim 1<br>(Family: none) | 3<br>1,2,4-18 |
| Y<br>A | JP 2005-71755 A (Matsushita Electric Industrial<br>Co., Ltd.),<br>17 March, 2005 (17.03.05),<br>Par. Nos. [0009] to [0016]; Figs. 2, 3<br>(Family: none) | 16,17<br>1-15,18 |
| A | JP 2005-32681 A (Matsushita Electric Industrial<br>Co., Ltd.),<br>03 February, 2005 (03.02.05),<br>Full text<br>(Family: none) | 1-18 |
| A | JP 2005-191002 A (Matsushita Electric<br>Industrial Co., Ltd.),<br>14 July, 2005 (14.07.05),<br>Full text<br>& US 2005/0197246 A1 & EP 1538689 A2 | 1-18 |
| A | JP 2005-108550 A (Tomoegawa Paper Co., Ltd.),<br>21 April, 2005 (21.04.05),<br>Claims 6, 7<br>(Family: none) | 1-18 |
| A | JP 2005-264346 A (Teijin Ltd.),<br>29 September, 2005 (29.09.05),<br>Claims 1, 9, 10; Par. Nos. [0018], [0019]<br>(Family: none) | 1-18 |

Form PCT/ISA/210 (continuation of second sheet) (April 2007)

**INTERNATIONAL SEARCH REPORT**

International application No.

PCT/JP2008/053044

C (Continuation). DOCUMENTS CONSIDERED TO BE RELEVANT

| Category* | Citation of document, with indication, where appropriate, of the relevant passages | Relevant to claim No. |
|---|---|---|
| A | JP 2001-514785 A (Ballard Power Systems Inc.), 11 September, 2001 (11.09.01), Full text & WO 98/27606 A1 | 1-18 |

Form PCT/ISA/210 (continuation of second sheet) (April 2007)

**INTERNATIONAL SEARCH REPORT**

International application No.

PCT/JP2008/053044

| Box No. II | Observations where certain claims were found unsearchable (Continuation of item 2 of first sheet) |

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

| Box No. III | Observations where unity of invention is lacking (Continuation of item 3 of first sheet) |

This International Searching Authority found multiple inventions in this international application, as follows:

There must exist a special technical feature so linking a group of inventions of claims as to form a single general inventive concept in order that the group of inventions may satisfy the requirement of unity of invention. The group of inventions of claims 1-15, 18 is considered to be linked only by the technical feature of "a gas diffusion electrode for solid polymer fuel cells containing a nonwoven fabric, a porous fluororesin and a carbon material".

This technical feature, however, cannot be a special technical feature since it is disclosed in prior art documents such as JP 2002-313359 A (Mitsubishi Heavy Industries, Ltd.), (continued to extra sheet)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2008/053044

Continuation of Box No.III of continuation of first sheet(2)

25 October, 2002 (25.10.02).
   Consequently, it is obvious that the group of inventions of claims 1-15, 18 and respective inventions of claims 16 and 17 do not satisfy the requirement of unity of invention, and this international application contains two or more inventions.

Form PCT/ISA/210 (extra sheet) (April 2007)

**EP 2 124 276 A1**

## REFERENCES CITED IN THE DESCRIPTION

### Patent documents cited in the description

- JP 2003303595 A
- JP 2000058072 A
- JP 2001057215 A